Europäisches Patentamt

European Patent Office

Office européen des brevets

(11) Veröffentlichungsnummer: **0 266 536**
**B1**

(12) # EUROPÄISCHE PATENTSCHRIFT

(45) Veröffentlichungstag der Patentschrift: 23.01.91

(51) Int. Cl.⁵: **B 23 D 31/00,** B 23 D 15/12

(21) Anmeldenummer: 87113892.1

(22) Anmeldetag: 23.09.87

(54) Winkelschere.

(30) Priorität: 25.10.86 DE 3636445

(43) Veröffentlichungstag der Anmeldung:
11.05.88 Patentblatt 88/19

(45) Bekanntmachung des Hinweises auf die
Patenterteilung:
23.01.91 Patentblatt 91/04

(84) Benannte Vertragsstaaten:
AT BE CH DE FR IT LI NL SE

(56) Entgegenhaltungen:
DE-A-1 427 166
DE-A-2 341 101
DE-A-3 219 539
DE-B-1 502 970
FR-A-1 537 951
GB-A-1 422 950

(73) Patentinhaber: **Karl Eugen Fischer GmbH
Maschinenfabrik
D-8622 Burgkunstadt (DE)**

(72) Erfinder: **Röder, Georg, Dipl.-Ing.
Blaicher Strasse 26
D-8650 Kulmbach (DE)**

(74) Vertreter: **Patentanwälte Czowalla . Matschkur
+ Partner
Dr.-Kurt-Schumacher-Strasse 23 Postfach 9109
D-8500 Nürnberg 11 (DE)**

Courier Press, Leamington Spa, England.

## Beschreibung

Die Erfindung bezieht sich auf eine Winkelschere zum Schneiden von Tafeln oder Platten, insbesondere aus Metall, mit einem Schneidtisch und zwei rechtwinklig zueinander angeordneten Scheren mit jeweils feststehenden Untermessern und beweglichen Obermessern, wobei der Obermesserträger durch einen Kurbelantrieb mit beidends angeordneten Kurbelwangen heb- und senkbar ist siehe z.B. DE—B 2 341 101.

Derartige Winkelscheren ermöglichen eine optimale Schnittführung und Plattenausnützung derart, daß — von einem Rechner gesteuert — aus einer mit Hilfe von Greifern in zwei Koordinatenrichtungen zum Schneidtisch verfahrbaren Platte aufeinanderfolgend jeweils ganz unterschiedliche Abschnitte ausgeschnitten werden, um auf diese Weise sowohl die Platte optimal, d.h. mit möglichst wenig Verschnitt, auszunutzen und andererseits die Gesamtdauer zum Ausschneiden aller benötigter Teile möglichst geringzuhalten.

Infolge der großen Massen der Obermesserträger, die im allgemeinen über einen Elektromotor und ein zwischengeschaltetes Schwungrad angetrieben werden, ergeben sich besonders bei langen Quermessern erhebliche Probleme mit der richtigen Anlenkung der Kurbelwangen. Infolge der meist vorgesehenen Neigung derart, daß die Längs- und Quermesser an ihren, dem gemeinsamen Eckpunkt abgelegenenen Enden zunächst zu schneiden beginnen, werden bei einer Anlenkung der Kurbelwange in Richtung auf das Längsmesser starke Verwindungskräfte am vorlaufenden Schneidende des Quermessers auf den Obermesserträger wirksam und umgekehrt ergeben sich starke Scherbeanspruchungen bei Anlenkung der Kurbelwange in der Nähe des freien Endes des Quermessers.

Um diese Schwierigkeiten zu vermeiden, ist erfindungsgemäß vorgesehen, daß die auf der Seite der kürzeren Querschere angeordnete kurbelwange zur seitlichen Freilegung ihres Einlaufspaltes eine Ausladung aufweist, daß zumindest auf der Seite des Quermessers zwei getrieblich miteinander verbundene Kurbelwangen vorgesehen sind, die in Richtung der Quermesser versetzt am Obermesserträger angreifen und daß die oberen Anlenkpunkte der kurbelwangen gegenüber ihren näher bei einanderliegenden unteren Anlenkpunkten jeweils um gleiche Winkel entgegengesetzt geneigt versetzt angeordnet sind.

Durch diese beiden Kurbelwangen auf der Seite des Quermessers — auf der gegenüberliegenden Seite kann, brauchen jedoch im allgemeinen keine zwei Kurbelwangen vorgesehen zu sein — ist es relativ problemlos möglich, beiden obenstehenden gegenläufigen Beanspruchungsbedingungen gerecht zu werden und somit eine Kraftübertragung sowohl nahe der Einlaufstirnfläche mit dem Längsmesser, als auch dem freien ende des Quermessers zu erhalten.

Neben einer Anordnung, bei der die unteren und oberen Anlenkpunkte der beiden Kurbelwangen auf einer Seite des Obermesserträgers gleich weit voneinander entfernt sind, ist erfindungsgemäß vorgesehen, daß die oberen Anlenkpunkte der Kurbelwellen gegenüber ihren näher beieinanderliegenden unteren Anlenkpunkten jeweils um gleiche Winkel entgegengesetzt geneigt versetzt angeordnet sind. Durch diese Ausbildung können die unteren Anlenkpunkte sehr nahe beieinanderliegen, was den Abtrieb der Hilfskurbelwelle für die zweite innere Kurbelwange von der Kurbelwelle für die äußere Kurbelwange sehr viel einfacher mache, da in diesem Fall nicht allzu große direkt auf den beiden Kurbelwellen sitzende Zahnräder miteinander kämmen können.

Dabei hat es sich in Weiterbildung der Erfindung als besonders zweckmäßig erwiesen erwiesen, die Kurbelwangen auf unterschiedlichen Seiten des Ständers anzuordnen, wobei die innere, eine kraftschlüssige Antriebsverbindung zum dem Längsmesser abgelegenen Teil des Obermesserträgers bewirkende Kurbelwange je nach Wahl der Anlenkpunkte keine oder nur eine geringere Ausladung aufzuweisen braucht als die äußere Kurbelwange.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

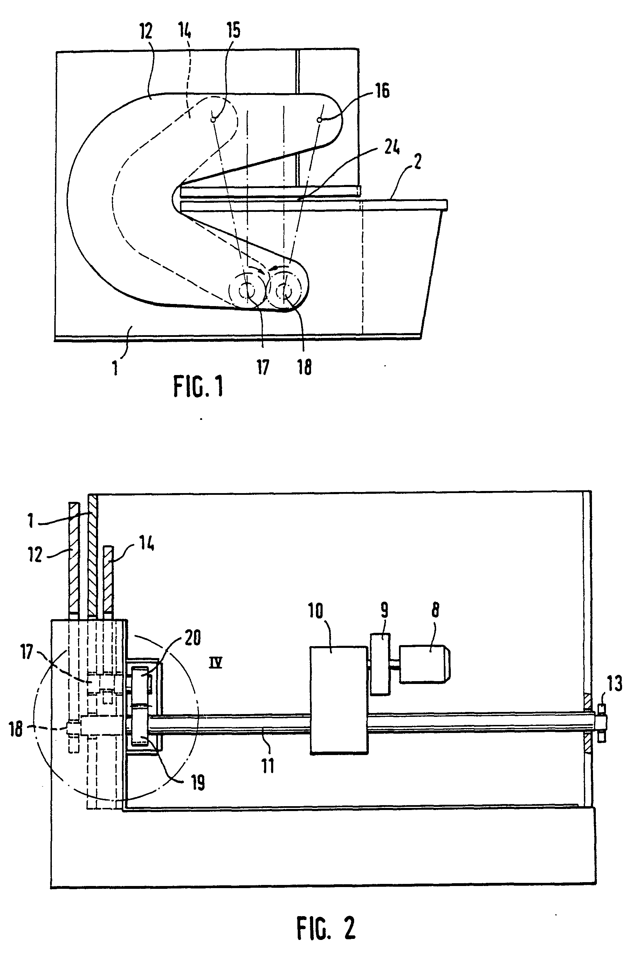

Fig. 1 eine Seitenansicht einer erfindungsgemäßen Winkelschere von der Seite der Querschere aus gesehen,

Fig. 2 einen horizontalen Schnitt durch die Winkelschere etwa in Höhe des Schneidtisches,

Fig. 3 eine Seitenansicht von der der Querschere abgelegenen Seite,

Fig. 4 eine vergrößerte Darstellung des Ausschnitts IV in Fig. 2,

Fig. 5 einen vergrößerten Ausschnitt etwa des Bereichs VI in Aufsicht auf die Maschine und

Fig. 6 eine perspektivische schematische Darstellung der Unter- und Obermesser zur Verdeutlichung ihrer Neigung.

Die gezeigte Winkelschere umfaßt den Ständer 1 mit dem Schneidtisch 2 sowie die festen unteren Längsmesser 3 und Quermesser 4 sowie die am beweglichen Obermesserträger 5 befestigten oberen Längsmesser 6 und oberen Quermesser 7. Zum Antrieb des Obermesserträgers 5 ist ein Kurbelantrieb vorgesehen, bei dem ein Elektromotor 8 über ein Schwungrad 9 und ein Getriebe 10 die Kurbelwelle 11 antreibt, auf deren beiden Enden Kurbelwangen 12 und 13 sitzen. Auf der Seite der Querschere mit dem festen Untermesser 4 und dem beweglichen Obermesser 7 ist dabei die Kurbelwange 12 in an sich bekannter Weise mit einer Ausladung versehen, so daß der seitliche Einlaufspalt 24 zum Verschieben einer Blechplatte mit Hilfe einer nicht gezeigten Greiferanordnung frei bleibt.

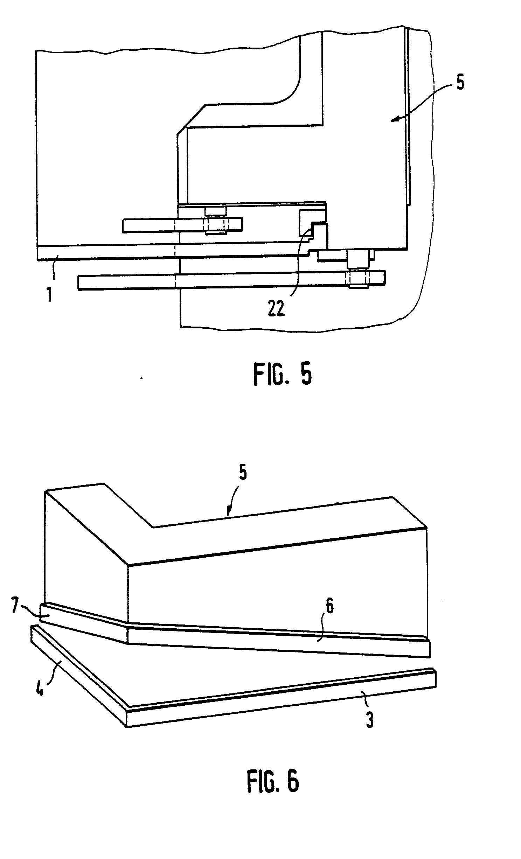

Um eine gleichmäßige Krafteinleitung in den Obermesserträger zu gewährleisten, die auch der Tatsache Rechnung trägt, daß wegen der in Fig. 6 zu erkennenden Neigung der Obermesser gegenüber den Untermessern die Schneidkräfte an sehr unterschiedlichen Stellen auftreten, ist erfindungsgemäß auf der Seite der Quermesser 4 und 7 nicht nur eine Kurbelwange 12 vorgesehen, sondern — im vorliegenden Fall auf die Innenseite des Ständers 1 verlagert — eine zweite Kurbelwange 14, deren oberer Angriffspunkt 15 gegenüber dem Angriffspunkt 16 der äußeren Kurbelwange weiter nach rückwarts, d.h. näher zum freien Ende der Quermesser 4, 7 verlagert ist.

Dabei ist die Anordnung so getroffen, daß die unteren Anlenkpunkte 17 und 18 der beiden Kurbelwangen 12 und 14 möglischt nahe beieinander liegen, so daß die eigentliche Kurbelwelle 11 mit Hilfe eines auf ihr sitzenden Zahnrads 19 unmittelbar mit einem gleichgroßen Zahnrad 20 auf der Hilfskurbelwelle 21 kämmen kann. Bei dieser Ausbildung ist dann die Verbindungslinie der Anlenkpunkte 15, 17 der inneren Kurbelwange 14 bzw. 16, 18 der äußeren Kurbelwange 12 entgegengesetzt zueinander um gleiche Winkel gegenüber der Vertikalen geneigt.

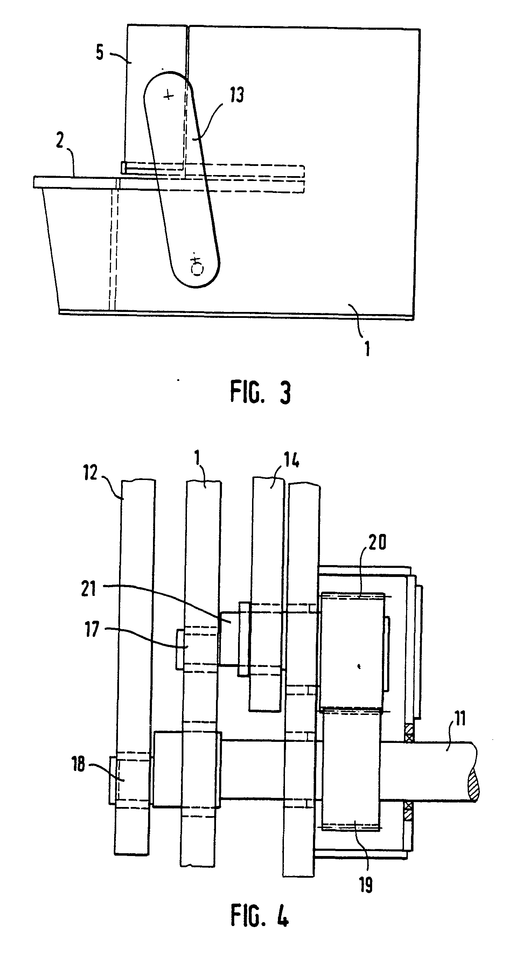

In Fig. 5 ist bei 22 schematisch die an sich bekannte Führung des Obermesserträgers 5 am Ständer 1 zu erkennen. Fig. 3 zeigt, wie auf der den Quermessern 4, 7 abgelegenen Seite eine einfache Kurbelwange 13 ohne Ausladung zum Heben und Senken des Obermesserträgers 5 ausreicht, wobei man aus dieser Darstellung auch sehr einfach erkennen kann, daß in diesem Fall eine zweite, versetzt am Obermesserträger angreifende Kurbelwange unnötig ist.

## Patentansprüche

1. Winkelschere zum Scheiden von Tafeln oder Platten, insbesondere aus Metall, mit einem Schneidtisch (2) und zwei rechtwinklig zueinander angeordneten Scheren mit jeweils feststehenden Untermessern (3, 4) und beweglichen Obermessern (6, 7) wobei der Obermesserträger (5) durch einen Kurbelantrieb mit beidends angeordneten Kurbelwangen heb- und senkbar ist, dadurch gekennzeichnet, daß die auf der Seite der kürzeren Querschere angeordnete kurbelwange zur seitlichen Freilegung ihres Einlaufspaltes eine Ausladung aufweist, daß zumindest auf der Seite des Quermessers (4, 7) zwei getrieblich miteinander verbundene Kurbelwangen (12, 14) vorgesehen sind, die in Richtung der Quermesser (4, 7) versetzt am Obermesserträger (5) angreifen, und daß die oberen Anlenkpunkte (15, 16) der Kurbelwangen (12, 14) gegenüber ihren näher beieinanderliegenden unteren Anlenkpunkten (17, 18) jeweils um gleiche Winkel entgegengesetzt geneigt versetzt angeordnet sind.

2. Winkelschere nach Anspruch 1, dadurch gekennzeichnet, daß die Kurbelwangen (12, 14) auf unterschiedlichen Seiten des Ständers (1) angeordnet sind.

## Revendications

1. Cisaille angulaire pour la découpe de panneaux ou de plaques, notamment en métal, avec une table de découpe (2) et deux cisailles disposés en formant entre elles un angle droit et comportant respectivement des lames inférieures fixes (3, 4) et des lames supérieures mobiles (6, 7), le porte-lames supérieur (5) pouvant être soulevé et abaissé par l'intermédiaire d'un système d'entraînement à manivelle avec des bras de manivelle disposés aux deux extrémités, caractérisée en ce que le bras de manivelle disposé du côté de la cisaille transversale plus courte, présente une forme en col de cygne en vue du dégagement latéral de l'interstice d'entrée de cette cisaille, en ce que, au moins sur le côté de la lame transversale (4, 7) sont prévus deux bras de manivelle (12, 14) qui sont reliés entre eux par une transmission et qui attaquent le porte-lame supérieur (5) de manière décalée dans la direction des lames transversales (4, 7), et en ce que les points d'articulation supérieurs (15, 16) des bras de manivelle (12, 14) sont disposés, par rapport à leurs points d'articulation inférieurs (17, 18) plus rapprochés, en étant décalés respectivement selon des inclinaisons d'un angle identique et de directions opposées.

2. Cisaille angulaire selon la revendication 1, caractérisée en ce que les bras de manivelle (12, 14) sont disposés sur des côtés différents du montant (1).

## Claims

1. Angle shears for cutting slabs or plates, in particular of metal, with a cutting table (1) and two shears arranged at right angles to one another, having fixed lower blades (3, 4) in each case and movable upper blades (6, 7), the upper blade support (5) being capable of lifting and lowering by means of a crank drive with crank webs arranged at each end, characterised in that the crank web located on the side of the shorter transverse shear has an overhang for laterally exposing its intake gap, in that two drivingly connected crank webs (12, 14) are provided at least on the side of the transverse blade (4, 7) and act in an offset manner on the upper blade support (5) in the direction of the transverse blade (4, 7), and in that the upper hinge points (15, 16) of the crank webs (12, 14) are offset so as to be inclined in opposite directions by the same angle relative to their lower hinge points (17, 18), which are closer together.

2. Angle shears according to claim 1, characterised in that the crank webs (12, 14) are located on different sides of the stand (1).

EP  0 266 536  B1

FIG. 1

FIG. 2

1

FIG. 3

FIG. 4

FIG. 5

FIG. 6